Europäisches Patentamt

(19) European Patent Office

Office européen des brevets

(11) Publication number: **0 259 155 B1**

(12) **EUROPEAN PATENT SPECIFICATION**

(45) Date of publication of patent specification: **14.10.92**   (51) Int. Cl.⁵: **C10G 11/18, B01J 8/32**

(21) Application number: **87307768.9**

(22) Date of filing: **03.09.87**

(54) **Process for stripping catalyst from catalytic cracking reaction zone.**

(30) Priority: **03.09.86 US 903365**
**03.09.86 US 903186**
**03.09.86 US 903351**
**03.09.86 US 903189**

(43) Date of publication of application:
**09.03.88 Bulletin 88/10**

(45) Publication of the grant of the patent:
**14.10.92 Bulletin 92/42**

(84) Designated Contracting States:
**BE DE FR GB IT NL**

(56) References cited:
**EP-A- 0 127 285**
**EP-A- 0 148 024**
**US-A- 3 380 911**
**US-A- 3 894 934**
**US-A- 4 090 948**

(73) Proprietor: **MOBIL OIL CORPORATION**
**150 East 42nd Street**
**New York New York 10017(US)**

(72) Inventor: **Herbst, Joseph Anthony**
**60 Bryant Road**
**Turnersville New Jersey 08012(US)**
Inventor: **Owen, Hartley**
**5 Riverview Terrace**
**Belle Mead New Jersey 08502(US)**
Inventor: **Schipper, Paul Herbert**
**2506 Berwyn Road**
**Wilmington Delaware 19810(US)**

(74) Representative: **Colmer, Stephen Gary**
**Patent Department c/o Mobil Services Company Limited Mobil Court 3 Clements Inn**
**London WC2A 2EB(GB)**

Rank Xerox (UK) Business Services

## Description

This invention relates to a process for stripping, or desorbing, entrained hydrocarbon material and, where present, sulfur-containing material, from a catalyst mixture recovered from a catalyic cracking reaction zone.

In the conventional FCC, or Fluidized Catalytic Cracking process, a hydrocarbon feedstock, such as gas oil, is cracked in an elongated reactor riser, at high temperature, to lighter hydrocarbon products. Known catalysts include large pore crystalline zeolites, such as zeolite X or Y, and intermediate pore crystalline zeolites, such as ZSM-5. The reaction products, with spent catalysts, are discharged into a separator located in an enclosed stripping vessel, with the spent catalyst flowing downwardly therein. Entrained hydrocarbons are stripped from spent catalyst with stripping gas, such as steam or nitrogen. The stripped catalyst is then regenerated in a fluidized bed regenerator. Following regeneration, the catalyst is recycled to the riser to crack more feed. FCC processes are described in US 3,617,497 and 4,219,407.

An FCC catalyst of mixtures of ZSM-5 and other zeolites is disclosed in US 3,758,403 to Rosinski et al. The ZSM-5 circulates with the other catalyst.

It would be desirable to provide a process and apparatus which can use conventional FCC catalyst and a different catalyst, eg., an intermediate pore zeolite catalyst, and regenerate the conventional catalyst more than the different catalyst.

In US 4,116,814, Zahner teaches use of two different kinds of catalyst, with separation of catalyst occurring in the fluidized regenerator. This approach will work, but when a less coke sensitive catalyst containing ZSM-5 is used the catalyst spends time unnecessarily in the regenerator.

The approach taken in U.S. 4,490,241 to keeping the ZSM-5 additive out of the regenerator is to make the additive very light, so that it can be collected in secondary cyclones downstream of the riser reactor. Use of very small particles of ZSM-5 additive which is recycled from secondary cyclones will work but will result in rapid loss of ZSM-5 additive with catalyst fines. Use of light, or low density, ZSM-5 additive will also minimize the residence time of the ZSM-5 in the riser reactor because the light catalyst will not "slip" in the riser as much as the conventional catalyst. The light ZSM-5 will be largely kept out of the regenerator, but at the price of less residence time in the riser reactor.

U.S. 4,336,160 reduces hydrothermal degradation of conventional FCC catalyst by staged regeneration. However, all the catalyst from the reactor still is regenerated, thus providing opportunity for hydrothermal degradation.

ZSM-5 does not deactivate from the amount of coke deposited on it from one pass through the reactor riser. Sending this partially-coked, but still highly active, ZSM-5 to the regenerator results in unnecessary hydrothermal degradation of the ZSM-5 in the regenerator.

Separation of an additive in the regenerator helps, but still exposes the additive to unnecessary regeneration. Use of a light-weight (or small size) additive can minimize additive residence time in the regenerator, but also minimizes additive residence time in the riser reactor.

In addition to the foregoing disadvantages, known catalytic cracking processes using catalyst mixtures are incapable of carrying out stripping and/or any other operation under conditions which differ for each catalyst component. It might be advantageous to strip, e.g., a conventional zeolite cracking catalyst with steam and strip a ZSM-5 additive catalyst with $H_2$ to reactivate the ZSM-5. This cannot be done commercially as both catalyst components remain substantially uniformly admixed throughout the FCC unit.

US 4,287,088 describes segregation of used contaminated catalyst into fractions according to particle density differences.

The art has not satisfactorily solved the problem of minimizing the residence time of an additive catalyst in the regenerator, increasing an additive's residence time in a riser reactor, or providing additive catalyst with a different stripping treatment than the conventional catalyst.

According to the present invention there is provided a process for stripping, or desorbing, entrained hydrocarbon material and where present, sulfur-containing material, from a catalyst mixture recovered from a catalytic cracking reaction zone which comprises:

a) providing a quantity of catalyst mixture containing at least one entrained material selected from hydrocarbon material and sulfur-containing material, in at least one stripping zone in which a stripping gas removes the entrained hydrocarbon material, the catalyst mixture comprising, a first catalyst component and a second catalyst component, the first catalyst component including particles of an amorphous cracking catalyst, a large pore crystalline zeolite cracking catalyst or admixtures thereof, and, the second catalyst component comprising particles of a shape selective medium pore crystalline silicate zeolite catalyst, the particles of first and second catalyst components being present in admixture, and

b) passing ethylene through the stripping zone containing the particles of the shape selective medium pore crystalline silicate zeolite catalyst, thereby conducting an exothermic reaction within the stripping zone containing particles of the second catalyst component, the heat released by the exothermic reaction providing an increase in the temperature of the catalyst in the stripping zone.

Further features of the invention are defined in the dependent claims.

Reference is now made to the accompanying drawings, in which:

Fig. 1A and 1B each schematically illustrate a single riser FCC unit for use in the process of the invention;

Fig. 2 schematically illustrates the process of the invention carried out in a dual riser cracking unit using a sieve catalyst stripper to separate additive from conventional catalyst; and,

Fig. 3 illustrates the process of the invention using reactor riser elutriation of mixed catalyst, and an elutriating stripper.

Fig. 4 shows another riser reactor elutriator and stripper elutriator for use with the process of the invention.

Fig. 5-7 illustrate a catalyst reactivation zone may be added to the process of the invention.

Fig. 8-9 show stripping efficiency versus temperature.

## CONVENTIONAL CATALYST

Preferred conventional catalyst zeolite components include mordenite, faujasite, zeolites X and Y, with particular preference being accorded zeolites Y, REY, USY and RE-USY and mixtures thereof. These are usually used in an amorphous matrix.

## ADDITIVE CATALYSTS

Preferred additive catalysts comprise the shape-selective crystalline silicates such as ZSM-5, ZSM-11, ZSM-12, ZSM-23, ZSM-35, ZSM-38, ZSM-48, and other similar materials.

U. S. 3,702,886 and U. S. Reissue 29,948 describe ZSM-5. U. S. 4,061,724 describes a high silica ZSM-5 referred to as "silicalite".

ZSM-11 is described in U. S. 3,709,979.

ZSM-12 is described in U. S. 3,832,449.

ZSM-23 is described in U. S. 4,076,842.

ZSM-35 is described in U. S. 4,016,245.

ZSM-38 is described in U. S. 4,046,859.

ZSM-48 is described in U. S. 4,375,373.

ZSM-5 is particularly preferred as an additive.

In general, the aluminosilicate zeolites are preferred. However, zeolites with some other framework elements present in partial or total substitution of aluminum can be advantageous. Such zeolites may convert more feed to aromatics increasing the octane, and quality, of the gasoline product. Illustrative of elements which can be substituted for part or all of the framework aluminum are boron, gallium, titanium and, in general, any trivalent metal which is heavier than aluminum. Specific zeolites include ZSM-5 and Zeolite beta containing boron, gallium and/or titanium. In lieu of, or in addition to, being incorporated into the zeolite framework, these and other catalytically active elements can also be deposited upon the zeolite by other procedures, e.g., impregnation.

Separation of additive catalyst from conventional catalyst component in the stripper may be accomplished by elutriation or sieving. Separation in the stripper according to their settling rate (elutriation) is preferred.

This permits the catalyst having the greater settling rate to separate from the catalyst having the lower settling rate. The catalysts are separately sent to a regenerator, and to the reactor. Residence time of catalyst in the stripper primarily depends on the linear velocity of the fluid in the stripper which lifts catalyst up and the settling rate of the catalyst. In conventional catalyst stripping all catalyst components circulate through the stripper at about the same rate. When ZSM-5 catalyst additives are used the additives are needlessly subjected to the catalyst-degrading regeneration. In accordance with the invention, it is possible to separate in the stripper the conventional catalyst from the additive catalyst. To promote separation of additive from conventional catalyst in the stripper the average density, particle size and/or shape of the additive can be adjusted to provide the desired settling characteristics.

It is preferred that the additive be less elutriable than the conventional catalyst. This increases additive residence time in the upflow, riser reactor used in FCC. The additive should have a longer residence time in the reactor, and a shorter residence time in the regenerator, than the conventional FCC catalyst.

3

A wide portion in the reactor risers may be enough to increase the residence time of the additive in the riser.

As an alternative, a catalyst stripper may be used to separate an additive from conventional catalyst, with recycle of additive to the riser.

Another approach would be ballistic separation of additive from conventional catalyst as coked catalyst and cracked product are discharged from the riser.

Separation in the stripper can also be achieved by classifying the particles by density. In general, smaller, less dense catalyst particles tend on average to define an upper phase in the stripper, floating upon larger, more dense catalyst particles.

Regardless of the method or methods used, the following principles apply:

1. The additive should be heavier (or less elutriable) to have a longer residence time in the riser.

2. The separation of additive from conventional catalyst should occur outside the regenerator.

It is within the scope of the invention to separate additive from conventional catalyst before or after stripping.

REACTIVATION

Once resolution of the catalyst mixture in different regions of the stripper has been accomplished, the additive, e.g., a catalyst comprising a shape selective zeolite may be reactivated with a suitable reactivating medium, e.g., $H_2$ or $H_2$-rich gas, under conventional reactivation conditions, e.g., a temperature of 427 to 815°C (800°F to 1500°F) or even higher and preferably 538 to 760°C (1000°F to 1400°F). Preferably, the $H_2$ or $H_2$-rich gas added is hotter than the catalyst. This improves the efficiency of any stripping taking place therein. The reactivation gas may be preheated by exchange with hot regenerated catalyst or flue gas from the regenerator. The reactivation effluent gas may be combined with the other product gases. The additive catalyst may or may not have been stripped before reactivation. If not completely stripped, the reactivation helps desorb hydrocarbons entrained on the additive.

CATALYST PHYSICAL PROPERTIES

Settling rates depend on density, size and shape of catalyst. Each of these will be briefly discussed.

Increased density increases residence time. To increase the residence time of the additive, e.g. the medium pore zeolite catalyst in the riser, the additive density can vary from 0.6 to 4.0 $gm/cm^3$, and preferably from 2.0 to 3.0 $gm/cm^3$, when the density of the conventional catalyst varies from 0.4 to 1.1 $gm/cm^3$ density, and preferably from 0.6 to 1.0 $gm/cm^3$.

A useful technique for increasing the density of the additive catalyst is to composite the, e.g., medium pore zeolite with a matrix which cokes quickly. This coking increases the density of the additive in situ. An illustrative matrix is hydrated alumina which in situ forms a transition alumina having a high coking rate. In the coked-up state, the additive is more resistant to attrition from collision with other particles in the riser. Such collisions also slow down the conventional catalyst in the riser by colliding with it, and knocking it back down the riser, momentarily. The coked-up additive tends to accumulate metals present in the feed.

The particle size of the additive, and the conventional catalyst can be adusted by conventional steps during manufacture. As between two particles of different size, the larger will remain in the riser longer. To increase the residence time of the additive in the riser the average particle size of the additive should be larger than that of the conventional catalyst. For example, the average particle size of the additive can vary from $500 \times 10^{-6}$ m (microns) to $70,000 \times 10^{-6}$ m (microns), and preferably from 1000 to $25,000 \times 10^{-6}$ m (microns) while the average particle size of the conventional catalyst varies from 20 to $150 \times 10^{-6}$ m (microns), and preferably from 50 to $100 \times 10^{-6}$ m (microns).

The shape, or geometry also affects relative settling rates. The more irregular the shape (i.e., the more the shape deviates from a sphere), the longer the residence time of the particles in the riser. Irregular-shaped particles can be readily made by using an extruded catalyst or crushing the extrudate.

The settling rate depends on the interaction of density, average particle size and particle shape. These factors each contribute to the desired result. For example, additive can simultaneously be denser, larger and more irregular in shape than the conventional catalyst. These factors partially offset one another, e.g., a much denser and slightly smaller average particle size additive can have a significantly faster settling rate than the conventional catalyst.

RISER ELUTRIATION

The preferred additive physical properties preferably lead to faster additive settling rates than the conventional catalyst particles. The additive catalyst therefore remains in the riser reactor zone longer than the conventional FCC catalyst. Residence time of catalyst in the riser depends primarily on the settling velocity of the catalyst and on the linear velocity up the riser of conversion products and unconverted feed. In conventional FCC units, all catalyst components circulate through the system at about the same rate. The additives, e.g., ZSM-5 in a matrix, do not require frequent regeneration but are regenerated. The additive's useful life is shortened. In the invention, the additive can remain longer, potentially forever, suspended in the riser. The density, particle size and/or shape of the additive catalyst can be adjusted to provide the desired settling characteristics. In general, as particle size or density increases, the residence time of the additive catalyst increases.

If the additive catalyst is larger and denser than the conventional catalyst component then gradual attrition of the additive (through particle collision) will gradually reduce additive size and residence time in the riser. As time goes on, more additive will enter the stripper where another stage of catalyst separation can occur. This arrangement, i.e., increased residence time in the riser coupled with additive separation in the stripper, reduces circulation of the less coke deactivated additive through the regenerator.

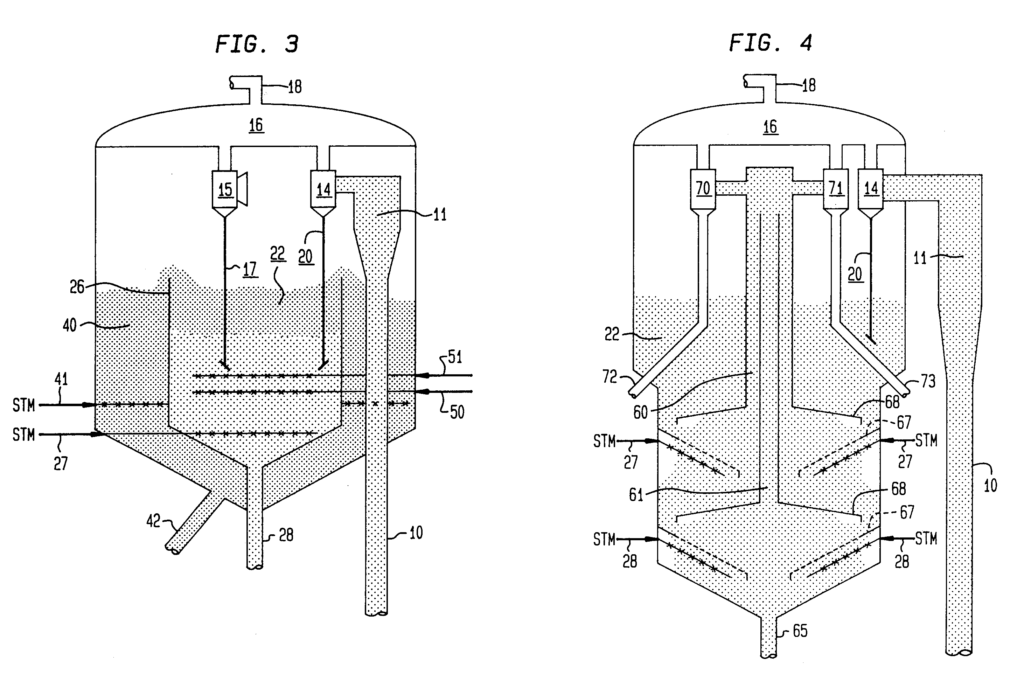

Increasing the cross sectional area of the riser will increase the riser residence time of the additive catalyst. Numerous geometric configurations can achieve this. The riser can flare out for a part of its length. As shown in Figs. 3 and 4, an upper section of the riser can be flared. The superficial vapor velocity decreases in the flared portion of the riser, and may approach the settling velocity of th additive. The additive "slips" back in the rising vapor concentrates in regions of reduced vapor velocity.

## ADDITIVE CONCENTRATION

The additive can be present over widely varying levels. When ZSM-5 additive is used, the zeolite concentration of ZSM-5 can be as low as 0.01 to 1.0 wt. % of the total catalyst inventory (as in U.S. 4,368,114) and as much as 25 wt. % of the total catalyst inventory.

## FCC REACTOR CONDITIONS

The catalytic cracking unit operates under conventional FCC conditions. Temperature may be 482 to 732°C (900 to 1350°F). A conventional catalyst to charge stock weight ratio of 2:1 to 15:1 and riser hydrocarbon residence times of 0.5 to 30 seconds may be used. Suitable charge stocks include all normally liquid petroleum fractions, e.g. gas oils, residuals oils, cycle stocks, whole crudes, tar sand oils, shale oils, synthetic fuels, and the like.

Single or multiple riser reactors can be used.

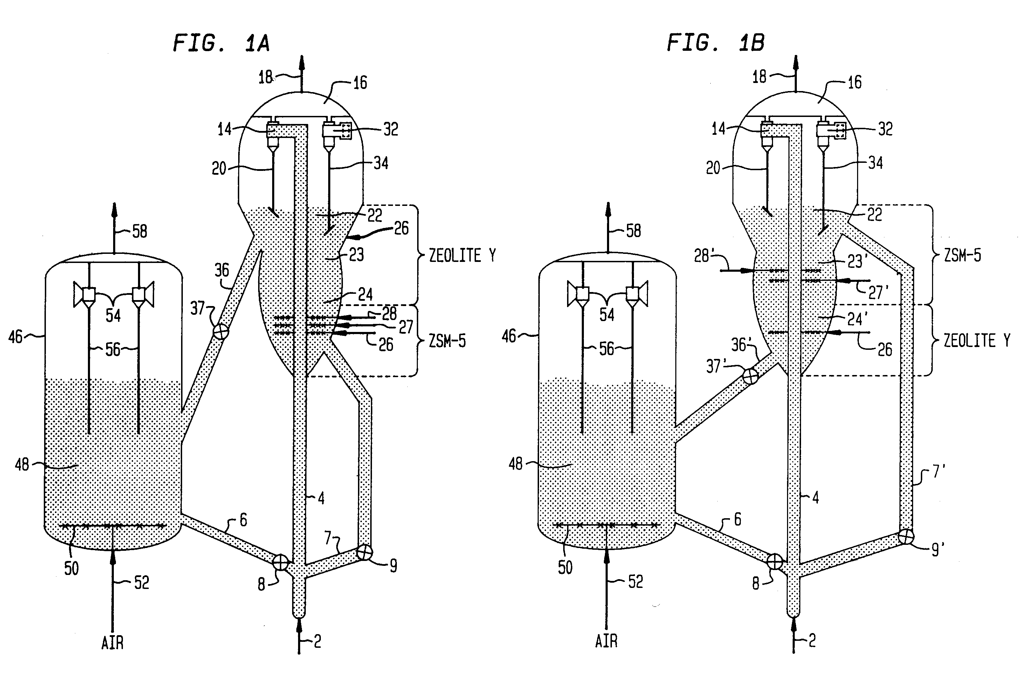

Referring now to Figure 1A, a conventional, preheated hydrocarbon feed 2 such as gas oil is charged to the bottom of riser 4. Hot regenerated conventional catalyst, e.g., zeolite Y in a matrix passes via line 6 and flow control valve 8 to the base of the riser. ZSM-5 additive, which is a little larger and slightly denser than the conventional catalyst, is added via line 7 and valve 9 to the base of the riser. The mixed catalysts and feed flow through the riser 4.

The mixed catalysts, with cracked products, discharge from the top of the riser, preferably into one or more cyclone separators 14 which separate catlyst from hydrocarbon vapors. There may be a plurality of cyclones in series or parallel. Vapors pass from cyclone 14 to a plenum chamber 16. This vapor, with stripping vapor and stripped hydrocarbons, passes via line 18 to fractionation equipment not shown. Catalyst discharges from the cyclones by diplegs 20 to a dense fluid bed of separated catalyst 22 in an upper section of stripper 26. Catalyst moves down counter-current to stripping gas. Due to the difference in settling rates the conventional FCC catalyst, being smaller and less dense than the additive catalyst, forms an upper phase 23 floating on an additive phase 24. Each phase contains some of the other catalyst, but each phase is relative enriched with one catalyst component or the other. A stripping gas, e.g., steam, nitrogen, light gas, etc. is added to phase 24 via line 26. Stripping gas removes hydrocarbons entrained by the catalyst. The stripping gas with desorbed hydrocarbons passes through one or more cyclones 32 which recover entrained catalyst and fines and return them to bed 22 by dipleg 34.

A light olefin feed, e.g., a gas rich in ethylene and/or propylene, can be introduced into the additive ZSM-5 phase 24 through conduit 27 to make higher molecular weight products and heat. Heat improves the efficiency of stripping. Preferably enough light olefin feed is added to increase the temperature at least 28°C (50°F), and more preferably at least 56°C (100°F). To do this, from 0.5 to 20, and preferably from 1 to 10, wt. % light olefins may be added, based on the total weight of the catalyst in the stripper. Catalyst bed temperature will increase from its usual range of 471 to 621°C (880-1150°F) of 499 to 677°C (930-

EP 0 259 155 B1

1250°F) and even higher. This enhances stripping of hydrocarbons and sulfur compounds from catalyst. This can increase the recovery of entrained hydrocarbons by 5 to 30 % or more, compared to stripping with no added olefins. If the feed in line 27 is mostly ethylene, other reactive light olefins, e.g., propylene, butylene or mixtures thereof, can be added via line 28 to take advantage of the high partial pressure of ethylene.

Hot, stripped, spent conventional FCC catalyst is withdrawn from upper phase 23 via line 36 and valve 37 and sent to regenerator 46 containing a dense fluid bed of catalyst 48. Regeneration gas, usually air, is added to the base of regenerator 46 via air distributor 50 and line 52. Cyclone separators 54 with diplegs 56 separate entrained catalyst and return it to bed 48. Flue gases pass from the cyclones into plenum chamber 16 and are removed by conduit 58. Hot regenerated catalyst then returns to the base of riser 4 by conduit 6.

Additive catalyst, preferably containing ZSM-5, in the lower phase 24 of bed 22 is recycled via line 7 and valve 9 to the base of riser 4 as discussed above.

Fig. 1B illustrates a similar FCC process using a less preferred embodiment of the invention. The additive, e.g. ZSM-5 catalyst in a matrix, is smaller and less dense than the conventional FCC catalyst. The additive concentrates in upper phase 23' of the stripper. The larger, denser conventional catalyst concentrates in the lower phase 24'. Conventional catalyst passes to regenerator 46 via conduit 36' and valve 37'. Stripped ZSM-5 additive recycles to riser 4 via conduit 7' and valve 9'. The optional heating of ZSM-5 catalyst in upper phase 23' may be done out as Fig. 1A, with ethylene-rich feed added via line 27' and additional $C_3$ and/or $C_4$ olefin added via line 28'.

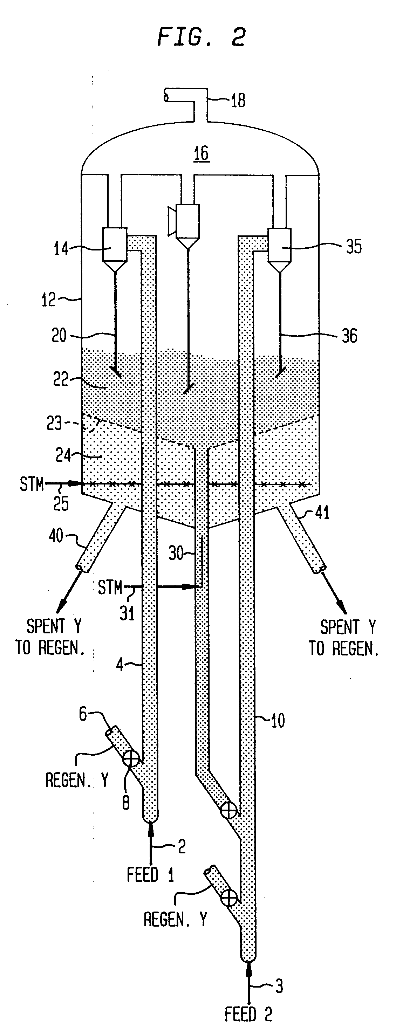

Fig. 2 shows a dual riser FCC operation. A gas oil feed 1 is added to riser 4 by line 2. Hot regenerated conventional cracking catalyst enters riser 4 via conduit 6 and valve 8. A suspension of catalyst in oil vapors passes up riser 4 and discharges into a cyclone 14 in the upper portion of vessel 12. The cyclone separates catalyst from cracked product which passes via plenum chamber 16 and conduit 18 to downstream fractionators. The catalyst is discharged from cyclone 14 by dipleg 20 into catalyst bed 22. A conically shaped perforate plate or sieve 23 separates the larger additive catalyst from the conventional catalyst which falls through the sieve to the lower section 24 of the stripper. Stripping gas, in this case steam, from line 25 strips entrained hydrocarbons from both conventional and additive catalyst.

The large additive catalyst gravitates toward the bottom of sieve 23 and eventually enters return conduit 30. Preferably, low pressure steam from line 31 blows smaller, less dense conventional catalyst entrained from the additive catalyst back up into catalyst bed 22.

Conventional catalyst, entering lower section 24 of the stripper, after stripping, passes via conduits 40 and 41 to the catalyst regenerator from which it is re-introduced to first riser 4 and/or second riser 10.

In the base of second riser 10, a suspension of additive catalyst of larger particle size and greater density than the conventional catalyst contacts a different charge stock, e.g., a $C_3$-containing feed (Feed 2), added via line 3. A temperature of 204 to 538°C (400° and 1000°F) are produced by additive catalyst to feed weight ratios of 2:1 to 10:1. The suspension formed rises through riser 10. The catalyst contact time is 2 to 20 seconds. The suspension discharges into one or more cyclones 35. Dipleg 36, discharges separated catalyst into bed 22 where it is separated into its additive and conventional catalyst components by sieve 23. The conversion products, with the stripping vapors, pass through secondary cyclone 34. Vapors pass from plenum chamber 16 via line 18 to a downstream separation facility (not shown). Catalyst fines and entrained catalyst return to bed 22 via dipleg 34.

Figs. 3 and 4 show a single riser FCC unit provided with an elutriating stripper, and elutriating riser. The risers shown in Figs. 3 and 4 have a bigger diameter at the top. This reduces the linear velocity of the fluid to prolong the residence time of the additive, which settles faster than the conventional catalyst. Flared region 11 retains a large percentage of the additive catalyst present in the system. The additive catalyst has a combination of density, particle size and perhaps even shape such that the vapor velocity approximately balances the settling rate of the additive. The additive suspended in region 11 catalyzes selective cracking to light olefins such as $C_{3-6}$ olefins, oligomerization, alkylation, isomerization, aromatization, disproportionation, etc. These reactions increase gasoline octane. Meanwhile, the conventional catalyst, e.g., zeolite Y in a matrix, passes through flared region 11 with the reaction products. The riser discharges into one or more cyclones 14.

As shown in Fig. 3, a mixture of comparatively dense additive and less dense conventional catalyst is discharged from cyclone 14 via dipleg 20 to catalyst bed 22 in a vessesl 26. Stripping gas, e.g., steam, is added via conduit 27 in the lower section thereof. Vessel 26 is in a central region of the stripper. The additive gravitates to the bottom of vessel 26. After stripping, additive enters conduit 28 for recycle to riser 10. Ascending stripping gas and desorbed hydrcarbons act as a lift medium and carry the low density conventional catalyst out of vessel 26 into an outer peripheral region 40 the lower section of which gets

6

stripping steam from line 41. Stripping gas and stripped hydrocarbons are separated from catalyst in cyclone 15. Vapor goes to plenum chamber 16. Catalyst returns to catalyst bed 22 via dipleg 17. Dipleg 17 may also discharge into region 40. Stripped, spent conventional catalyst continues down through the stripper and is withdrawn via conduit 42 and conveyed to a regenerator (not shown).

An ethylene-rich gas may be added via line 50 and, optionally, $C_3$ and/or $C_4$ olefin can be added via line 51, to make oligomerate and heat, which improves stripping. Vapor from the riser and the strippers ultimately enters plenum chamber 16 and passes via conduit 18 to downstream product recovery (not shown).

Additive catalyst is then recycled via line 5 and valve (not shown) to a lower region of riser 10. $H_2$, $H_2$-rich gas and/or one or more light hydrocarbons such as methane, propane, ethylene, propylene, etc., may be added at the base of the riser via lines (not shown) to reactivate the additive and strip hydrocarbon and/or sulfur-containing material. The reactivating procedure pre-accelerates the catalyst for subsequent contact with conventional catalyst further up the riser. The ascending pre-accelerated suspension of additive and hydrocarbon vapor combines with hot regenerated conventional catalyst in an upper section or riser 10. The feed, e.g., a gas oil/resid is cracked to lower boiling products by conventional catalyst. Other reactions occur in the flared section 11 of the riser attributable primarily to the additive, e.g., shape selective ZSM-5 catalyst, which produces high octane gasoline.

In Fig. 4, descending catalyst bed 22 in an outer region of the stripper encounters stripping steam from lines 27 and 28. The steam lifts the less dense conventional catalyst up concentrically arranged vertical conduits 60 and 61, respectively. The denser additive catlyst flows down through return conduit for recycle to riser 10. Stripping gas is preferably added below perforated baffles 67 so that the gas blows the conventional catalyst against baffles 68 which direct catalyst up conduits 60 and 61 to one or more cyclones 70 and 71. The separated, spent, conventional catalyst passes via conduits 72 and 73 to the regenerator. Regenerated catalyst returns to riser. A heavy hydrocarbon, such as gas oil/resid, is added to the riser at a point just above the regenerated catalyst inlet.

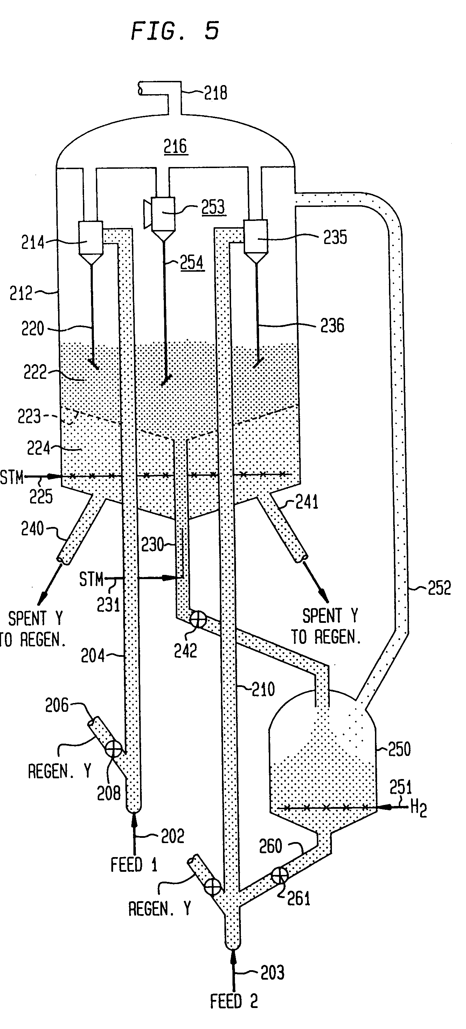

Fig. 5 illustrates a dual riser for use in the process of the invention. A gas oil, feed 1 is added to a first riser 204 by conduit 202, with hot regenerated conventional FCC catalyst from 206 and 208. A suspension of catalyst in oil vapor passes up through riser 204 and discharges directly into a cyclone 214 in the upper section of stripper 212. Hydrocarbon vapors enter plenum chamber 216 and are removed by via line 218 for separation in downstream equipment not shown. Spent catalyst recovered in cyclone 214 is discharged by diplet 220 into catalyst bed 222. A conically shaped perforate plate or sieve 223 separates the larger, denser additive, e.g., ZSM-5 catalyst, from the conventional catalyst. Conventional catalyst passes through the sieve to the lower section 24 of the stripping zone. Stripping steam added via line 225 removes entrained hydrocarbons from the conventional catalyst. The additive gravitates to the bottom of sieve 223 and eventually enters return conduit 230. Low pressure steam from line 231 blows entrained conventional catalyst back into catalyst bed 222. Conventional catalyst is removed from lower section 224 via one or more conduits 240 and 241 to the catalyst regenerator zone. Following conventional regeneration, the conventional catalyst is reintroduced to riser 204 and/or second riser 210.

In riser 210, a suspension of additive and a different charge stock e.g., a $C_3$-containing feed, from line 203 mix. The temperature is 204 to 538°C (400° to 1000°F) and the catalyst to charge stock weight ratio is 2:1 to 10:1. The suspension formed moves up riser 210. Catalyst contact time is 2 to 20 seconds. The suspension discharges into one or more cyclones 235 provided with diplegs 236. Separated catalyst enters bed 222 where it is separated into additive and conventional catalyst by sieving. All gas streams combine in plenum chamber 216.

Additive is conveyed through conduit 30 and valve 42 to reactivation vessel 50, which can also be as a stripper. $H_2$ or $H_2$-rich gas is added through line 51. Reactivation takes place under conventional conditions. Gaseous effluent from reactivation, with some entrained catalyst, passes via line 252 to cyclone separator 253. Gas passes to plenum chamber 216 and recovered catalyst is discharged to catalyst bed 222 via dipleg 254. Reactivated additive passes via line 260 and valve 261 to the bottom of riser 210.

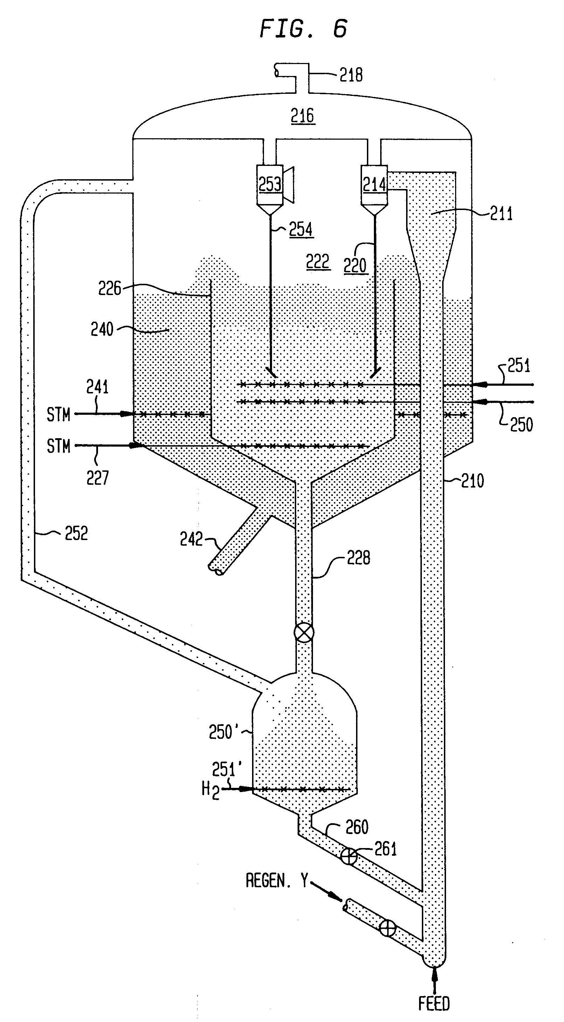

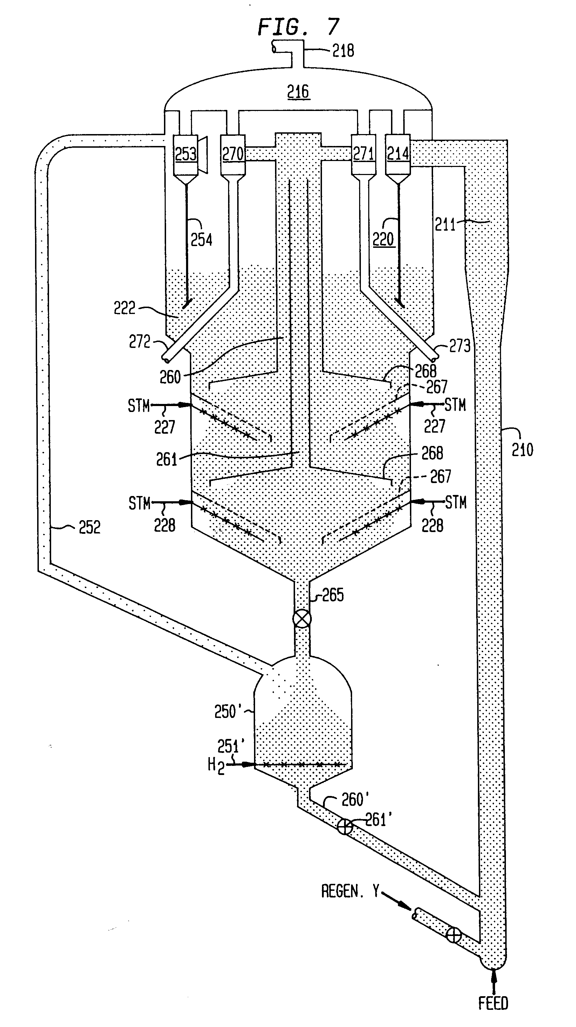

Figs. 6 and 7 each show a single riser FCC unit provided with an elutriating riser and an elutriating stripper. The riser is of a preferred type, i.e., it is much wider at the top to reduce the linear velocity of the fluid there. The flaring should be enough to decrease the superficial vapor velocity. Conventional flaring, to accommodate molar expansion up the riser, will not be enough. This prolongs the residence time of the additive which is larger and/or denser than the conventional catalyst. Flared region 211 accumulates additive which has a settling rate approaching the linear velocity in this region. The additive, or at least a lot of it, remains more or less stationary, or suspended, in region 211 to catalyze reactions, which make gasoline product with increased octane. The conventional catalyst continues past flared region 211 with the products of conversion, and discharges from the top of the riser into one or more cyclone separators 214 provided with dipleg 220. Eventually, some additive leaves the riser.

As shown in Fig. 6, a mixture of dense additive and conventional catalyst passes from cyclone 214 via dipleg 220 to catalyst bed 222 in vessel 226. Stripping gas, e.g., steam, from conduit 227 removes volatiles from the catalyst. The additive gravitates to the bottom of vessel 226 and enters conduit 228 for transfer to reactivation vessel 250' which operates as described in connection with Fig. 5, with $H_2$ added via line 251. Stripping gas and desorbed hydrocarbons lift less dense particles of conventional catalyst out of vessel 226 into an outer peripheral region 240 the lower section of which has its own supply of stripping steam from line 241. Stripped, spent conventional catalyst is withdrawn via conduit 242 and sent to a regenerator (not shown).

A light olefin feed, e.g., a gas rich in ethylene and/or propylene, can be added via line 250 to the additive concentrated in the lower section of catalyst bed 222 to make higher weight products and heat. Heating improves stripping efficiency. Enough light olefin should be added to increase the temperature at least 28°C(50°F), and preferably at least 56°C (100°F). To do this, 0.5 to 20, and preferably 1 to 10, wt. % of light olefin feed can be added based on weight of catalyst in the stripper. Catalyst temperature will increase from 471-621°C (880-1150°F) to 499-676°C (930-1250°F) and even higher. This enhances the stripping, or desorption, of hydrocarbons and, where present, sulfur compounds, entrained on the catalyst. Reaction products, and some entrained catalyst, are removed from reactivator 250 via line 252 and discharged into the dilute phase above bed 240.

Optionally, if the feed in line 250 is predominantly ethylene, then propylene, butylene or mixtures thereof, can be added via line 251 to take advantage of the high partial pressure of the ethylene therebelow. Amounts of $C_3$ and/or $C_4$ olefin added may be 0.1 to 5, and preferably 0.2 to 3, wt. % of the catalyst in bed 222.

Gas from the riser, the stripping operations and the reactivation vessel enter plenum chamber 216 and passes via line 218 to a downstream separation (not shown).

As shown in Fig. 7, descending catalyst bed 222 in an outer region of the stripping zone encounters stripping gas, e.g., steam, from lines 227 and 228 which lifts the conventional catalyst up concentrically arranged vertical conduits 260 and 261, respectively. The additive catalyst flows down and enters conduit 265 for transfer to reactivation vessel 250 which operates as previously described.

Stripping gas is advantageously added below perforated baffles 267 so that less dense conventional catalyst encounters baffles 268, which guide the flow of conventional catalyst up conduits 260 and 261 into one or more cyclone separators 270 and 271 from which catalyst flows via conduits 272 and 273 to the regenerator (not shown).

EXPERIMENTAL

EXAMPLE 1

A typical conversion product distribution profile for an exothermic reaction involving ethylene is as follows:

| Product | wt. % |
|---|---|
| $C_{5+}$ (includes paraffins, olefins, aromatics, naphthenes, etc.) | 73.0 |
| pentanes | 14.8 |
| n-butane | 1.6 |
| isobutane | 4.6 |
| butene | 6.5 |
| propane | 2.5 |
| propylene | 2.3 |
| ethane | 0.6 |
| ethylene | 8.8 |
| methane | 0.1 |

Example 1 shows the useful products obtained by the conversion of ethylene to heavier hydrocarbons. This conversion of ethylene will heat the catalyst, and hotter catalyst can be stripped more thoroughly of hydrocarbons and sulfur.

EXAMPLE 2

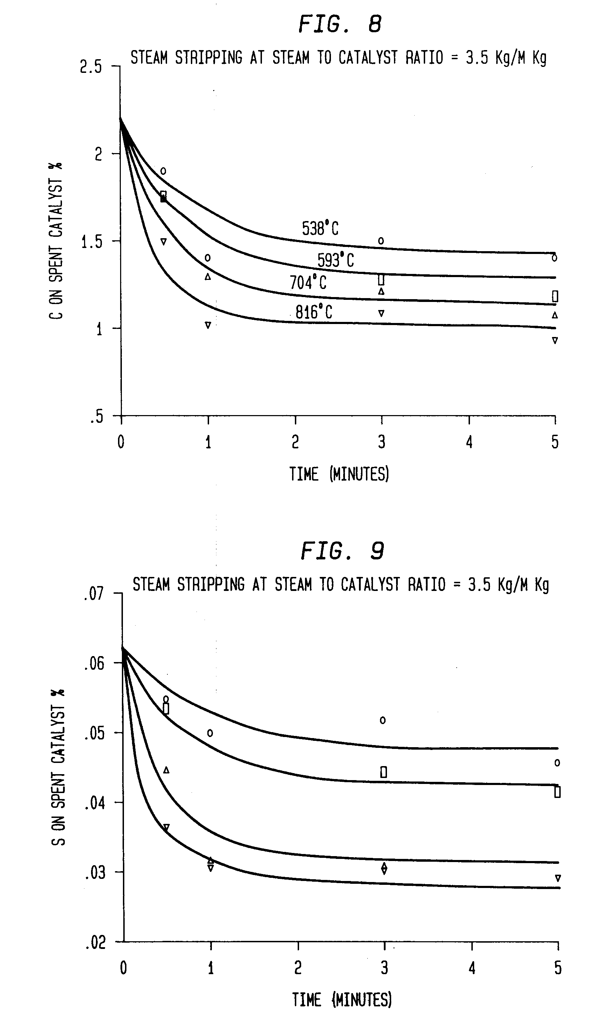

The improved stripping obtained by increasing the temperature of the catalyst bed is shown in Figs. 8 and 9 where, in a steam stripping operation carried out at a steam to catalyst ratio of 3.5 weights steam per 1000 weights of catalyst, the reduction over time (minutes) in wt. % entrained hydrocarbon (Fig. 8) and sulfur (Fig. 9) on the spent catalyst is given for different temperatures. As the catalyst gets hotter, steam stripping removes more sulfur and hydrocarbon.

## Claims

1. A process for stripping, or desorbing, entrained hydrocarbon material and where present, sulfur-containing material, from a catalyst mixture recovered from a catalytic cracking reaction zone which comprises:

   a) providing a quantity of catalyst mixture containing at least one entrained material selected from hydrocarbon material and sulfur-containing material, in at least one stripping zone in which a stripping gas removes the entrained hydrocarbon material, the catalyst mixture comprising, a first catalyst component and a second catalyst component, the first catalyst component including particles of an amorphous cracking catalyst, a large pore crystalline zeolite cracking catalyst or admixtures thereof, and, the second catalyst component comprising particles of a shape selective medium pore crystalline silicate zeolite catalyst, the particles of first and second catalyst components being present in admixture, and

   b) passing ethylene through the stripping zone containing the particles of the shape selective medium pore crystalline silicate zeolite catalyst, thereby conducting an exothermic reaction within the stripping zone containing particles of the second catalyst component, the heat released by the exothermic reaction providing an increase in the temperature of the catalyst in the stripping zone.

2. The process of claim 1 wherein the exothermic reaction is carried out by introducing an ethylene-rich feed in the stripping zone containing particles of second catalyst component downstream of introduction of the stripping gas into the zone, the ethylene-rich feed undergoing exothermic conversion therein to other products.

3. The process of claim 1 or 2 wherein the exothermic reaction increases the temperature of the catalyst present within the stripping zone by at least about 28°C (50°F).

4. The process of claim 1, 2 or 3 wherein the temperature of the catalyst present within the stripping zone is increased as a result of the exothermic reaction from within the range of 471-612°C to within the range of 499-677°C.

5. The process of any of the preceeding claims wherein from 0.5 to 20 weight percent of ethylene-rich feed by weight of catalyst present in the stripping zone is provided.

6. The process of any of the preceeding claims wherein from 5 to 30 weight percent additional hydrocarbon material is removed compared to the same stripping operation carried out in the absence of such exothermic reaction.

7. The process of any of the preceeding claims wherein at least one other highly reactive light olefin is introduced in the stripping zone at a level which is above the level of introduction of the ethylene-rich feed therein.

8. The process of any of the preceeding claims wherein the highly reactive light olefin is a $C_3$ and/or $C_4$ olefin-rich feed.

9. The process of claim 7 wherein from 0.1 to 5 weight percent of highly reactive olefin by weight of catalyst present in the stripping zone is provided.

10. The process of any of the preceeding claims wherein the first catalyst component is a large pore crystalline silicate zeolite cracking catalyst.

11. The process of claim 7 wherein the large pore crystalline silicate zeolite cracking catalyst comprises at least one member of the group consisting of mordenite, zeolite X, Y, REY, USY and RE-USY and mixtures thereof and the shape selective medium pore crystalline silicate zeolite comprises at least one member of the group consisting of ZSM-5, ZSM-11, ZSM-12, ZSM-23, ZSM-35, ZSM-38 and ZSM-48.

**Patentansprüche**

1. Verfahren zum Strippen oder Desorbieren eines mitgerissenen Kohlenwasserstoffmaterials und, falls vorhanden, eines schwefelhaltigen Materials aus einer Katalysatormischung, das aus einer katalytischen Crackreaktionszone gewonnen wird, welches umfaßt:

   a) Bereitstellung einer Menge einer Katalysatormischung, die zumindest ein mitgerissenes Material enthält, das aus einem Kohlenwasserstoffmaterial und einem schwefelhaltigen Material ausgewählt ist, in mindestens einer Strippingzone, in der das Stippinggas das mitgerissene Kohlenwasserstoffmaterial entfernt, wobei diese Katalysatormischung eine erste Katalysatorkomponente und eine zweite Katalysatorkomponente umfaßt, wobei die erste Katalysatorkomponente Partikel eines amorphen Crackkatalysators, eines großporigen kristallinen Zeolithcrackkatalysators oder Mischungen davon enthält und die zweite Katalysatorkomponente Partikel eines formselektiven kristallinen Silicatzeolithkatalysators mit mittleren Poren umfaßt, wobei die Partikel der ersten und zweiten Katalysatorkomponente in Vermischung vorhanden sind und

   b) Leiten von Ethylen durch die Strippingzone, die Partikel des formselektiven kristallinen Silicatzeolithkatalysators mit mittleren Poren enthält, wodurch innerhalb der Strippingzone, die Partikel der zweiten Katalysatorkomponente enthält, eine exotherme Reaktion durchgeführt wird, wobei die durch die exotherme Reaktion freigesetzte Wärme einen Temperaturanstieg des Katalysators in der Strippingzone bewirkt.

2. Verfahren nach Anspruch 1, worin die exotherme Reaktion durchgeführt wird, indem in die Strippingzone, die Partikel der zweiten Katalysatorkomponente enthält, stromabwärts der Einführung des Strippinggases in die Zone eine ethylenreiche Zufuhr eingeführt wird, wobei diese ethylenreiche Zufuhr der exothermen Umwandlung in andere Produkte unterliegt.

3. Verfahren nach Anspruch 1 oder 2, worin die exotheme Reaktion die Temperatur des Katalysators, der innerhalb der Strippingzone vorhanden ist, um mindestens etwa 28°C (50°F) erhöht.

4. Verfahren nach Anspruch 1, 2 oder 3, worin die Temperatur des Katalysators, der innerhalb der Strippingzone vorhanden ist, als Folge der exothermen Reaktion von einem Bereich von 471 bis 612°C auf einen Bereich von 499 bis 677°C erhöht wird.

5. Verfahren nach einem der vorstehenden Ansprüche, worin bezogen auf das Gewicht des in der Strippingzone vorhandenen Katalysators von 0,5 bis 20 Gew.-% der ethylenreichen Zufuhr bereitgestellt werden.

6. Verfahren nach einem der vorstehenden Ansprüche, worin im Vergleich mit dem gleichen Strippingverfahren, das ohne diese exotherme Reaktion durchgeführt wird, von 5 bis 30 Gew.-% zusätzliches Kohlenwasserstoffmaterial entfernt werden.

7. Verfahren nach einem der vorstehenden Ansprüche, worin mindestens ein anderes stark reaktives leichtes Olefin in einem Niveau in die Strippingzone eingeführt wird, das oberhalb des Niveaus der Einführung der ethylenreichen Zufuhr liegt.

8. Verfahren nach einem der vorstehenden Ansprüche, worin das stark reaktive leichte Olefin eine Zufuhr ist, die reich an $C_3$- und/oder $C_4$-Olefin ist.

9. Verfahren nach Anspruch 7, worin bezogen auf das Gewicht des in der Strippingzone vorhandenen Katalysators von 0,1 bis 5 Gew.-% eines stark reaktiven Olefins bereitgestellt werden.

10. Verfahren nach einem der vorstehenden Ansprüche, worin die erste Katalysatorkomponente ein Crackkatalysator in Form eines großporigen kristallinen Silicatzeoliths ist.

11. Verfahren nach Anspruch 7, worin der Crackkatalysator in Form eines großporigen kristallinen Silicatzeoliths mindestens eine Verbindung aus der Gruppe umfaßt, die aus Mordenit, Zeolith X, Y, REY, USY und RE-USY und Mischungen davon besteht, und der formselektive kristalline Silicatzeolith mit mittleren Poren mindestens eine Verbindung aus der Gruppe umfaßt, die aus ZSM-5, ZSM-11, ZSM-12, ZSM-23, ZSM-35, ZSM-38 und ZSM-48 besteht.

**Revendications**

1.  Un procédé d'extraction ou de désorption d'un matériau hydrocarboné entraîné et, s'il est présent, d'un matériau contenant du soufre, à partir d'un mélange de catalyseurs récupéré d'une zone de réaction de craquage catalytique, qui consiste:

    a) à placer une certaine quantité d'un mélange de catalyseurs, contenant au moins un matériau entraîné choisi parmi les matériaux hydrocarbonés et les matériaux contenant du soufre, dans au moins une zone d'extraction dans laquelle un gaz d'extraction extrait le matériau hydrocarboné entraîné, le mélange de catalyseurs comprenant un premier composant catalyseur et un deuxième composant catalyseur, le premier composant catalyseur comprenant des particules d'un catalyseur de craquage amorphe, d'un catalyseur de craquage du type zéolite cristalline à pores de grande dimension ou de leurs mélanges, le deuxième composant catalyseur comprenant des particules d'un catalyseur zéolite du type silicate cristallin à pores moyens et à sélectivité de forme, les particules du premier composant catalyseur et du deuxième composant catalyseur étant présentes en mélange, et

    b) à faire passer de l'éthylène à travers la zone d'extraction contenant les particules du catalyseur zéolite du type silicate cristallin à pores moyens et à sélectivité de formes, de façon à mettre en oeuvre une réaction exothermique dans la zone d'extraction contenant des particules du deuxième composant catalyseur, la chaleur dégagée par la réaction exothermique assurant une augmentation de la température du catalyseur dans la zone d'extraction.

2.  Le procédé selon la revendication 1, dans lequel la réaction exothermique est mise en oeuvre par introduction d'une charge riche en éthylène dans la zone d'extraction contenant des particules du deuxième composant catalyseur en aval du point d'introduction du gaz d'extraction dans la zone, la charge riche en éthylène subissant une conversion exothermique en d'autres produits.

3.  Le procédé selon la revendication 1 ou 2, dans lequel la réaction exothermique augmente d'au moins environ 28°C (50°F) la température du catalyseur présent dans la zone d'extraction.

4.  Le procédé selon la revendication 1, 2 ou 3, dans lequel la température du catalyseur présent dans la zone d'extraction augmente de l'intervalle 471-612°C à l'intervalle 499-677°C en conséquence de la réaction exothermique.

5.  Le procédé selon l'une quelconque des revendications précédentes, dans lequel on amène de 0,5 à 20% en poids de charge riche en éthylène, par rapport au poids du catalyseur présent dans la zone d'extraction.

6.  Le procédé selon l'une quelconque des revendications précédentes, dans lequel on élimine de 5 à 30% en poids d'hydrocarbures supplémentaires par rapport à ce que l'on a avec la même opération d'extraction mise en oeuvre en l'absence de ladite réaction exothermique.

7.  Le procédé selon l'une quelconque des revendications précédentes, dans lequel au moins une autre oléfine légère à réactivité élevée est introduite dans la zone d'extraction en un point situé au-dessus du niveau d'introduction de la charge riche en éthylène dans cette zone.

8.  Le procédé selon l'une quelconque des revendications précédentes, dans lequel l'oléfine légère à réactivité élevée est une charge riche en oléfine en $C_3$ et/ou $C_4$.

9.  Le procédé selon la revendication 7, dans lequel on amène de 0,1 à 5% en poids d'oléfine à réactivité élevée par rapport au poids du catalyseur présent dans la zone d'extraction.

10. Le procédé selon l'une quelconque des revendications précédentes, dans lequel le premier composant catalyseur est un catalyseur de craquage zéolite du type silicate cristallin à pores de grande dimension.

11. Le procédé selon la revendication 7, dans lequel le catalyseur de craquage zéolite du type silicate cristallin à pores de grande dimension comprend au moins un membre du groupe comprenant la mordénite, les zéolites X, Y, REY, USY et RE-USY et leurs mélanges, la zéolite du type silicate cristallin à pores moyens et à sélectivité de forme comprenant au moins un membre du groupe comprenant les zéolites ZSM-5, ZSM-11, ZSM-12, ZSM-23, ZSM-35, ZSM-38 et ZSM-48.

FIG. 1A

FIG. 1B

## FIG. 2

FIG. 3

FIG. 4

EP 0 259 155 B1

# FIG. 5

## FIG. 6

FIG. 7

## FIG. 8

STEAM STRIPPING AT STEAM TO CATALYST RATIO = 3.5 Kg/M Kg

## FIG. 9

STEAM STRIPPING AT STEAM TO CATALYST RATIO = 3.5 Kg/M Kg